# EUROPEAN PATENT SPECIFICATION

(11) **EP 3 399 813 B1**
(45) Date of publication and mention of the grant of the patent: **15.05.2024**
(21) Application number: 16880909.3
(22) Date of filing: 07.12.2016
(51) Int. Cl.: H04W 74/02, H04W 74/00, H04W 74/08, H04W 72/0453, H04W 84/12

(54) **WIRELESS LOCAL AREA NETWORK COMMUNICATION METHOD AND COMMUNICATION DEVICE, AND SITE**
KOMMUNIKATIONSVERFAHREN UND KOMMUNIKATIONSNETZWERK IN EINEM DRAHTLOSEN LOKALEN NETZWERK UND STELLE
DISPOSITIF DE COMMUNICATION ET PROCÉDÉ DE COMMUNICATION DE RÉSEAU LOCAL SANS FIL ET SITE

(30) Priority: 28.12.2015 CN 201511016460
(43) Date of publication of application: 07.11.2018
(73) Proprietor: Meizu Technology Co., Ltd., Zhuhai, Guangdong 519085 (CN)
(72) Inventor: DONG, Xiandong, Zhuhai Guangdong 519085 (CN)
(74) Representative: DREISS Patentanwälte PartG mbB
(86) International application number: PCT/CN2016/108962
(87) International publication number: WO 2017/114119

(56) References cited:
- EP-A1- 3 242 527
- CN-A- 103 002 591
- CN-A- 104 254 136
- CN-A- 104 780 618
- CN-A- 105 554 891
- US-A1- 2011 261 740
- US-A1- 2014 010 211
- WOOJIN AHN (YONSEI UNIV): "UL-OFDMA procedure in IEEE 802.11ax ; 11-15-0091-01-00ax-ul-ofdma-procedure-in-i eee-802-11ax", IEEE DRAFT; 11-15-0091-01-00AX-UL-OFDMA-PROCEDURE-IN-I EEE-802-11AX, IEEE-SA MENTOR, PISCATAWAY, NJ USA, vol. 802.11ax, no. 1, 13 January 2015 (2015-01-13), pages 1-20, XP068082626, [retrieved on 2015-01-13]
- PO-KAI HUANG (INTEL): "NAV Consideration for UL MU Response to Trigger frame ; 11-15-1062-01-00ax-nav-consideration-for-u l-mu-response-to-trigger-frame", IEEE DRAFT; 11-15-1062-01-00AX-NAV-CONSIDERATION-FOR-U L-MU-RESPONSE-TO-TRIGGER-FRAME, IEEE-SA MENTOR, PISCATAWAY, NJ USA, vol. 802.11ax, no. 1, 15 September 2015 (2015-09-15), pages 1-19, XP068098260, [retrieved on 2015-09-15]
- PO-KAI HUANG (INTEL): "NAV Consideration for UL MU Response Follow Up ; 11-15-1326-02-00ax-nav-consideration-for-u l-mu-response-follow-up", IEEE DRAFT; 11-15-1326-02-00AX-NAV-CONSIDERATION-FOR-U L-MU-RESPONSE-FOLLOW-UP, IEEE-SA MENTOR, PISCATAWAY, NJ USA, vol. 802.11ax, no. 2, 11 November 2015 (2015-11-11), pages 1-23, XP068099286, [retrieved on 2015-11-11]

## Description

### Field of the Invention

The present invention relates to the technical field of communication, and specifically relates to a wireless local area network communication method, and a system comprising a wireless local area network communication device.

### Background of the Invention

Woojin Ahn, IEEE Draft; 11-15-0091-01-00ax-ul-ofdma-procedure-in-ieee-802-11ax, 20150113 IEEE-SA mentor, Piscataway, NJ USA, Vol:802.11ax, Nr:1,Page(s):1 - 20 discloses a wireless local area network communication method according to the preamble of claim 1.

On May 2013, IEEE 802.11 established the research group HEW (High efficiency WLAN, IEEE 802.11ax) of the next generation of Wi-Fi technology, namely, IEEE 802.11ax, with the main research point of improving the throughput of the existing Wi-Fi technology, improving the effective utilization rate of the frequency spectrum, improving the user experience and quality of service (QoE), and adapting to a more intensive communication environment than the existing Wi-Fi technology.

In the IEEE 802.11ax standard, it is specified that the OFDMA (Orthogonal Frequency Division Multiple Access, orthogonal frequency division multiple access) technology is adopted, so that multiple users may establish communication with an AP (Access Point, access point) at the same time, that is, an UL OFDMA (Uplink Orthogonal Frequency Division Multiple Access) mechanism, in this way, multiple STAs (Stations, stations) can simultaneously send their cached uplink data, and it is specified that the STAs need to use the OFDMA Back-off (back-off) mechanism to transmit uplink resources. However, it is not specified in the formulation of the Wi-Fi standard that how the STAs access the channel during the OFDMA Back-off, i.e., how to set an NAV (Network Allocation Vector).

EP 3242527 A1, cited under Art. 54(3) EPC, and the following nonpatent literature disclose further aspects of wireless local area network communications:
Po-Kai Huang, IEEE Draft; 11-15-1062-01-00ax-nav-consideration-for-ul-mu-response-to-trigger-frame, 20150915 IEEE-SA mentor, Piscataway, NJ USA, Vol:802.11ax,Nr:1, Page(s):1 - 19.
Po-Kai Huang, IEEE Draft; 11-15-1326-02-00ax-nav-consideration-for-ul-mu-response-follow-up, 20151111 IEEE-SA mentor, Piscataway, NJ USA, Vol: 802.11ax, Nr:2, Page(s):1 - 23.

### Summary of the Invention

Just on the basis of at least one of the above technical problems, the present invention proposes a novel wireless local area network communication solution, which realizes correct setting of an NAV by a station and ensures that an UL OFDMA mechanism is applied, thereby improving the utilization efficiency of a frequency spectrum, and indirectly improving the throughput of the system.

The invention is as defined in claim 1.

In this technical solution, the station which supports the UL OFDMA mechanism receives the message frame sent by the access point, and the message frame contains the OFDMA random access contention period field, so that the station contends for accessing the channel within the contention period indicated by the OFDMA random access contention period field, so that the station can set the network allocation vector to be idle after receiving the message frame and being allocated with the bandwidth resource, and then the station can contend for accessing the channel within an OFDMA Back-off period, correct setting of the NAV by the station is achieved, and the application of the UL OFDMA mechanism is ensured, thereby improving the utilization efficiency of the frequency spectrum, and indirectly improving the throughput of the system.

The OFDMA Back-off mechanism is mainly a random access process initiated after the station receives a trigger frame, where the access point adds a parameter to the trigger frame sent to the station, which is specifically as follows: when the station has data to send, if it is detected that the channel is busy, a random number N is selected from 0 to an OFDMA contention window and channel detection is continued; if it is detected again that the channel is busy, N remains unchanged, and if it is detected that the channel is idle, then 1 is reduced from N; when N=0, if it is detected again that the channel is idle, data is transmitted, and if it is detected again that the channel is busy, a random number is selected again, and the above process is executed again.

In the present embodiment, the access point directly allocates the bandwidth resource to the station in the message frame.

The bandwidth resource indicates the access channel bandwidth allocated by the AP to the station, such as 20 MHz channel bandwidth; and it may also contain spatial stream information.

All STAs allocated with the bandwidth resources set their own NAVs to be idle within the OFDMA Back-off period, indicating that they can contend for accessing the channel within this period, while other STAs that are not allocated with the bandwidth resources set their own NAVs to be busy within the OFDMA Back-off period, indicating that they cannot contend for accessing the channel within this period in order to avoid bringing interference to the communication of the STAs allocated with the bandwidth resources.

In any of the foregoing technical solutions, preferably, the OFDMA random access contention period field further includes start time information of an OFDMA random access contention period and duration information of the OFDMA random access contention period.

In this technical solution, the station which supports the UL OFDMA mechanism receives the message frame sent by the access point, and the message frame contains the OFDMA random access contention period field, so that the station contends for accessing the channel within the contention period indicated by the OFDMA random access contention period field, so that the station can set the network allocation vector to be idle after receiving the message frame and being allocated with the bandwidth resource, and then the station can contend for accessing the channel within an OFDMA Back-off period, correct setting of the NAV by the station is achieved, and the application of the UL OFDMA mechanism is ensured, thereby improving the utilization efficiency of the frequency spectrum, and indirectly improving the throughput of the system.

The access point directly allocates the bandwidth resource to the station in the message frame.

The bandwidth resource indicates the access channel bandwidth allocated by the AP to the station, such as 20 MHz channel bandwidth; and it may also contain spatial stream information.

All STAs allocated with the bandwidth resources set their own NAVs to be idle within the OFDMA Back-off period, indicating that they can contend for accessing the channel within this period, while other STAs that are not allocated with the bandwidth resources set their own NAVs to be busy within the OFDMA Back-off period, indicating that they cannot contend for accessing the channel within this period in order to avoid bringing interference to the communication of the STAs allocated with the bandwidth resources.

In any of the foregoing technical solutions, preferably, the OFDMA random access contention period field further includes start time information of an OFDMA random access contention period and duration information of the OFDMA random access contention period.

The invention is further defined in claim 3, which refers to a system comprising an access point and a wireless local area network communication device.

Through the above technical solutions, correct setting of the NAV by the station is achieved, and the application of the UL OFDMA mechanism is ensured, thereby improving the utilization efficiency of the frequency spectrum, and indirectly improving the throughput of the system.

### Brief Description of the Drawings

Fig. 1 shows a schematic flow diagram of a wireless local area network communication method according to one embodiment of the present invention;
Fig. 2 shows a schematic block diagram of a wireless local area network communication device according to an embodiment of the present invention;
Fig. 3 shows a schematic block diagram of a station according to an embodiment of the present invention;
Fig. 4 shows a schematic diagram illustrating when a station according to an embodiment of the present invention contends for accessing a channel;
Fig. 5 shows a schematic flow diagram of a wireless local area network communication method according to another embodiment of the present invention.

### Detailed Description of the Embodiments

In order to more clearly understand the above objects, features and advantages of the present invention, the present invention will be further described in detail below in conjunction with the drawings and specific embodiments.

In the following description, many specific details are set forth in order to fully understand the present invention. However, the present invention may also be implemented in other manners than those described herein. Therefore, the scope of protection of the present invention is not limited to the following specific embodiments disclosed below.

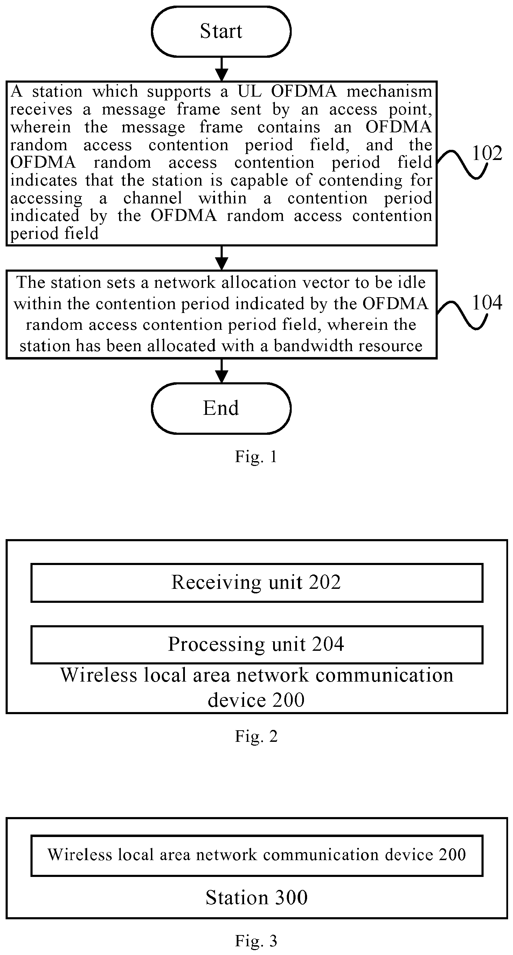

Fig. 1 shows a schematic flow diagram of a wireless local area network communication method according to one embodiment of the present invention.

As shown in Fig. 1, the wireless local area network communication method according to one embodiment of the present invention includes:
step 102, receiving a message frame sent by an access point with a station which supports a UL OFDMA mechanism, wherein the message frame contains an OFDMA random access contention period field, and the OFDMA random access contention period field indicates that the station is capable of contending for accessing a channel within a contention period indicated by the OFDMA random access contention period field; and
step 104, setting a network allocation vector to be idle within the contention period indicated by the OFDMA random access contention period field with the station, wherein the station has been allocated with a bandwidth resource.

The communication method shown in Fig. 1 may be executed by a mobile phone or a PDA (Personal Digital Assistant,), etc.

In this technical solution, the station which supports the UL OFDMA mechanism receives the message frame sent by the access point, and the message frame contains the OFDMA random access contention period field, so that the station contends for accessing the channel within the contention period indicated by the OFDMA random access contention period field, so that the station can set the network allocation vector to be idle after receiving the message frame and being allocated with the bandwidth resource, and then the station can contend for accessing the channel within an OFDMA Back-off period, correct setting of the NAV by the station is achieved, and the application of the UL OFDMA mechanism is ensured, thereby improving the utilization efficiency of the frequency spectrum, and indirectly improving the throughput of the system.

The OFDMA Back-off mechanism is mainly a random access process initiated after the station receives a trigger frame, where that the access point adds a parameter in the trigger frame sent to the station, which is specifically as follows: when the station has data to send, if it is detected that the channel is busy, a random number N is selected from 0 to an OFDMA contention window and channel detection is continued; if it is detected again that the channel is busy, N remains unchanged, and if it is detected that the channel is idle, then 1 is reduced from N; when N=0, if it is detected again that the channel is idle, data is transmitted, and if it is detected again that the channel is busy, a random number is selected again, and the above process is executed again.

According to one embodiment of the present invention, the message frame further contains information of the bandwidth resource allocated by the access point to the station.

In the present embodiment, the access point directly allocates the bandwidth resource to the station in the message frame.

According to another embodiment of the present invention, the method further includes: receiving a resource message allocation frame sent by the access point with the station, wherein the resource message allocation frame contains information of the bandwidth resource allocated by the access point to the station. The access point separately sends the resource message allocation frame to the station so as to allocate the bandwidth resource to the station. Specifically, the access point sends the resource allocation message frame to the station before the message frame is sent, and the resource allocation message frame is a broadcast message frame or a multicast message frame.

The bandwidth resource indicates the access channel bandwidth allocated by the AP to the station, such as 20 MHz channel bandwidth; and it may also contain spatial stream information.

All STAs allocated with the bandwidth resources set their own NAVs to be idle within the OFDMA Back-off period, indicating that they can contend for accessing the channel within this period, while other STAs that are not allocated with the bandwidth resources set their own NAVs to be busy within the OFDMA Back-off period, indicating that they cannot contend for accessing the channel within this period in order to avoid bringing interference to the communication of the STAs allocated with the bandwidth resources.

In any of the foregoing technical solutions, preferably, the OFDMA random access contention period field further includes start time information of an OFDMA random access contention period and duration information of the OFDMA random access contention period.

In any of the foregoing technical solutions, the message frame is a beacon frame.

Fig. 2 shows a schematic block diagram of a wireless local area network communication device according to an embodiment of the present invention;

As shown in Fig. 2, the wireless local area network communication device according to the embodiment of the present invention includes a receiving unit 202 and a processing unit 204.

The receiving unit 202 is used for receiving a message frame sent by an access point, wherein the message frame contains an OFDMA random access contention period field, and the OFDMA random access contention period field indicates that a station supporting a UL OFDMA mechanism can contend for accessing a channel within a contention period indicated by the OFDMA random access contention period field; and

the processing unit 204 is used for setting a network allocation vector to be idle within the contention period indicated by the OFDMA random access contention period field, wherein the station has been allocated with a bandwidth resource.

The receiving unit 202 may be a receiver or an antenna when being implemented; and the processing unit 204 may be a central processor or a baseband processor when being implemented.

In this technical solution, the station which supports the UL OFDMA mechanism receives the message frame sent by the access point, and the message frame contains the OFDMA random access contention period field, so that the station contends for accessing the channel within the contention period indicated by the OFDMA random access contention period field, so that the station can set the network allocation vector to be idle after receiving the message frame and being allocated with the bandwidth resource, and then the station can contend for accessing the channel within an OFDMA Back-off period, correct setting of the NAV by the station is achieved, and the application of the UL OFDMA mechanism is ensured, thereby improving the utilization efficiency of the frequency spectrum, and indirectly improving the throughput of the system.

According to one embodiment of the present invention, the message frame further contains information of the bandwidth resource allocated by the access point to the station. The access point directly allocates the bandwidth resource to the station in the message frame.

According to another embodiment of the present invention, the receiving unit 202 is further used for: receiving a resource message allocation frame sent by the access point, wherein the resource message allocation frame contains information of the bandwidth resource allocated by the access point to the station. In the present embodiment, the access point separately sends the resource message allocation frame to the station so as to allocate the bandwidth resource to the station. Specifically, the access point sends the resource allocation message frame to the station before the message frame is sent, and the resource allocation message frame is a broadcast message frame or a multicast message frame.

The bandwidth resource indicates the access channel bandwidth allocated by the AP to the station, such as 20 MHz channel bandwidth; and it may also contain spatial stream information.

All STAs allocated with the bandwidth resources set their own NAVs to be idle within the OFDMA Back-off period, indicating that can contend for accessing the channel within this period, while other STAs that are not allocated with the bandwidth resources set their own NAVs to be busy within the OFDMA Back-off period, indicating that they cannot contend for accessing the channel within this period in order to avoid bringing interference to the communication of the STAs allocated with the bandwidth resources.

In any of the foregoing technical solutions, preferably, the OFDMA random access contention period field further includes start time information of an OFDMA random access contention period and duration information of the OFDMA random access contention period.

Fig. 3 shows a schematic block diagram of a station according to an embodiment of the present invention.

As shown in Fig. 3, the station 300 according to the embodiment of the present invention includes the wireless local area network communication device 200 as shown in Fig. 2.

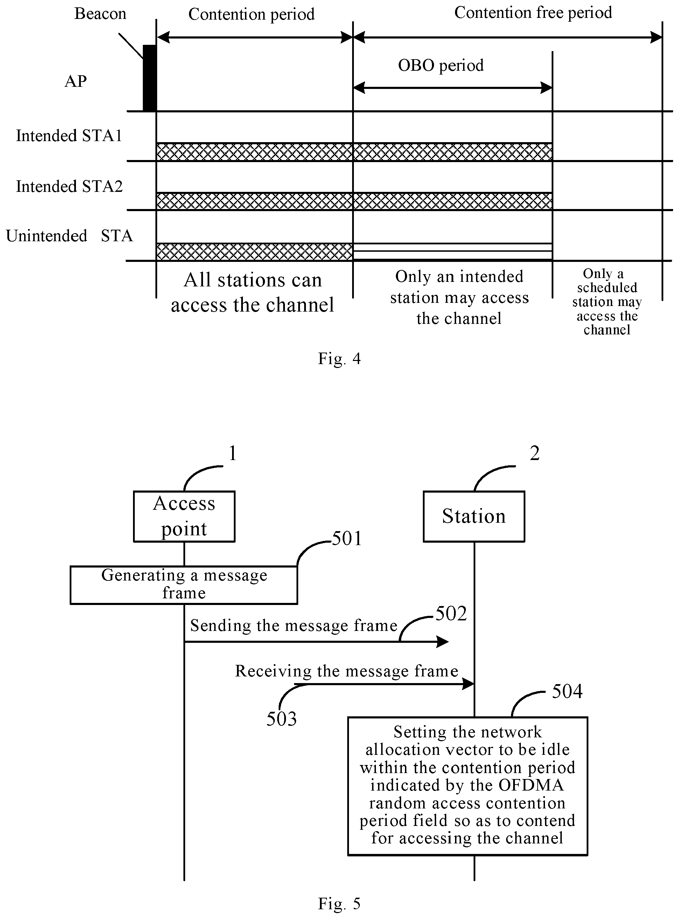

The technical solution of the present invention will be described in detail with reference to Figs. 4 and 5.

The technical solution of the present invention is mainly applied to the HE (High Efficiency) STAs that have been allocated with uplink resources by the AP, and the NAVs is set to be idle within the OFDMA Back-off (hereinafter referred to as OBO) period in a CFP (Contention-Free Period), and the other HE STAs that are not allocated the uplink resources set the NAVs to be busy.

The specific steps are as follows:
1. The AP defines a new information element IE, packages the information element in a Beacon frame, and sends the same to the station, wherein the format of the information element is shown in Table 1:

**Table 1**

| | Element ID | Length | OBO count | OBO interval | OBO start time | OBO duration |
|---|---|---|---|---|---|---|
| Byte□ | 1 | 1 | 1 | 1 | 2 | 2 |

As shown in Table 1, OBO count indicates how many OBOs will occur before the next CFP period; OBO start time indicates the start time of OBO within the CFP; OBO duration indicates the duration of the OBO within the CFP; and OBO interval indicates the interval of the OBO within the CFP.

### 2. HE STAs set the NAV

If the STAs have been allocated with uplink resources, the STAs set the NAVs to be idle within the OBO period; if the HE STAs are not allocated with the uplink resources, the STAs set their own NAVs to be busy, that is, the STAs cannot access the channel within the OBO period.

### 3. Legacy (backward compatible) STAs set the NAV

The AP sets the OBO parameter value according to the value of the CFP parameter, and here it is specified that the legacy STAs cannot access the channel within the period.

Specifically, as shown in Fig. 4, the AP sets a field in the beacon frame to indicate that the Intended STAs contend for accessing the channel within the OBO period specified within the contention-free period (CFP). Within the contention period, all stations can contend for accessing the channel. Within the OBO period in the CFP, only the Intended STAs can contend for accessing the channel, so the Intended STAs set their own NAVs to be idle within the OBO period, the other STAs set their own NAVs to be busy; at other time within the CFP, only the scheduled station can contend for accessing the channel, and the STAs including the Intended STAs set their own NAVs to be idle within this period.

Fig. 5 shows a schematic flow diagram of a wireless local area network communication method according to another embodiment of the present invention.

As shown in Fig. 5, the wireless local area network communication method according to another embodiment of the present invention includes:
step 501, an access point 1 generates a message frame, wherein the message frame contains an OFDMA random access contention period field, and the OFDMA random access contention period field indicates that a station that supports a UL OFDMA mechanism can contend for accessing a channel within a contention period indicated by the OFDMA random access contention period field.
Step 502, the access point 1 sends the message frame.
Step 503, a station 2 receives the message frame.
Step 504, the station 2 sets a network allocation vector to be idle within the contention period indicated by the OFDMA random access contention period field so as to contend for accessing the channel. It should be noted that when the station 2 contends for accessing the channel, it has already obtained the bandwidth resource allocated by the access point 1, and the information of the bandwidth resource may be indicated to the station 2 by the access point 1 in the generated message frame and is indicated to the station 2 by the access point 1 in a resource allocation message frame sent to the station 2.

The technical solutions of the present invention are described in detail above with reference to the drawings. The present invention provides a new wireless local area network communication scheme, so that after receiving the message frame sent by the access point, the station sets the network allocation vector to be idle if it has been allocated with the bandwidth resource, then the station can contend for accessing the channel within the OFDMA Back-off period, correct setting of the NAV by the station is achieved, and the application of the UL OFDMA mechanism is ensured, thereby improving the utilization efficiency of the frequency spectrum, and indirectly improving the throughput of the system.

## Claims

1. A wireless local area network communication method, comprising:
receiving (503) by a station (2) a message frame sent by an access point (1) wherein the station supports a UL OFDMA mechanism,
wherein OFDMA is an orthogonal frequency division multiple access,
wherein UL OFDMA is an uplink orthogonal frequency division multiple access,
wherein the message frame contains an OFDMA random access contention period field, and the OFDMA random access contention period field indicates that the station (2) can contend for an access channel within a contention period indicated by the OFDMA random access contention period field; and
setting (504) by the station (2) a network allocation vector to be idle within the contention period indicated by the OFDMA random access contention period field, wherein the station (2) has been allocated with a bandwidth resource, wherein
the method further comprises:
receiving by the station (2) a resource message allocation frame sent by the access point (1), wherein the resource message allocation frame contains information of the bandwidth resource allocated by the access point (1) to the station (2),
wherein the message frame is a beacon frame,
wherein the access point (1) sends
the resource allocation message frame to the station (2) before the message frame is sent, and wherein
a field is set in the beacon frame to indicate that Intended stations contend for accessing the channel within an OFDMA Back-Off, OBO, period specified within a contention-free period.

2. The wireless local area network communication method according to claim 1, wherein the OFDMA random access contention period field further comprises start time information of an OFDMA random access contention period and duration information of the OFDMA random access contention period.

3. System comprising an access point (1) and a wireless local area network communication device (200),
wherein the wireless local area network communication device (200) comprises:
a receiving unit (202) for receiving a message frame sent by an access point (1), wherein the message frame contains an OFDMA random access contention period field,
wherein OFDMA is an orthogonal frequency division multiple access,
and the OFDMA random access contention period field indicates that a station (2) supporting a uplink OFDMA mechanism can contend for an access channel within a contention period indicated by the OFDMA random access contention period field; and
a processing unit (204) for setting a network allocation vector to be idle within the contention period indicated by the OFDMA random access contention period field, wherein the station (2) has been allocated with a bandwidth resource, wherein
the receiving unit (202) is further configured for:
receiving a resource message allocation frame sent by the access point (1), wherein the resource message allocation frame contains information of the bandwidth resource allocated by the access point (1) to the station (2),
wherein the message frame is a beacon frame,
wherein the access point (1) sends the resource allocation message frame to the station (2) before the message frame is sent, and wherein
a field is set in the beacon frame to indicate that Intended stations, STAs, contend for accessing the channel within an OFDMA Back-Off, OBO, period specified within a contention-free period.

4. The system according to claim3, wherein the OFDMA random access contention period field further comprises start time information of an OFDMA random access contention period and duration information of the OFDMA random access contention period.

5. A station (2), comprising the wireless local area network communication device (200) comprised in the system according to any of claims 3 or 4.

## Patentansprüche

1. Kommunikationsverfahren eines drahtlosen lokalen Netzwerks, umfassend:
Empfangen (503), durch eine Station (2), eines Nachrichtenrahmens, der durch einen Zugangspunkt (1) gesendet wird, wobei die Station einen UL-OFDMA-Mechanismus unterstützt,
wobei OFDMA ein orthogonaler Frequenzmultiplex-Vielfachzugriff ist,
wobei UL OFDMA ein orthogonaler Uplink-Frequenzmultiplex-Vielfachzugriff ist,
wobei der Nachrichtenrahmen ein OFDMA-Direktzugriffskonkurrenzperiodenfeld enthält und das OFDMA-Direktzugriffskonkurrenzperiodenfeld angibt, dass die Station (2) um einen Zugangskanal innerhalb einer Konkurrenzperiode, die durch das OFDMA-Direktzugriffskonkurrenzperiodenfeld angegeben ist, konkurrieren kann; und
Einstellen (504), durch die Station (2), dass ein Netzwerkzuweisungsvektor innerhalb der durch das OFDMA-Direktzugriffskonkurrenzperiodenfeld angegebenen Konkurrenzperiode inaktiv ist, wobei der Station (2) eine Bandbreitenressource zugewiesen wurde, wobei
das Verfahren ferner umfasst:
Empfangen, durch die Station (2), eines Ressourcennachrichtenzuweisungsrahmens, der durch den Zugangspunkt (1) gesendet wird, wobei der Ressourcennachrichtenzuweisungsrahmen Informationen der Bandbreitenressource, die durch den Zugangspunkt (1) der Station (2) zugewiesen wird, enthält,
wobei der Nachrichtenrahmen ein Beacon Frame ist,
wobei der Zugangspunkt (1) den Ressourcenzuweisungsnachrichtenrahmen an die Station (2) sendet, bevor der Nachrichtenrahmen gesendet wird, und wobei
ein Feld in dem Beacon Frame eingestellt ist, um die vorgesehenen Stationen anzugeben, die um das Zugreifen auf den Kanal innerhalb einer OFDMA-Back-Off-Periode, OBO-Periode, die innerhalb eines konkurrenzfreien Zeitraums festgelegt ist, konkurrieren.

2. Kommunikationsverfahren eines drahtlosen lokalen Netzwerks nach Anspruch 1, wobei das OFDMA-Direktzugriffskonkurrenzperiodenfeld ferner Startzeitinformationen einer OFDMA-Direktzugriffskonkurrenzperiode und Dauerinformationen der OFDMA-Direktzugriffskonkurrenzperiode umfasst.

3. System, umfassend einen Zugangspunkt (1) und eine Kommunikationsvorrichtung (200) eines drahtlosen lokalen Netzwerks,
wobei die Kommunikationsvorrichtung (200) eines drahtlosen lokalen Netzwerks umfasst:
eine Empfangseinheit (202) zum Empfangen eines Nachrichtenrahmens, der durch einen Zugangspunkt (1) gesendet wird, wobei der Nachrichtenrahmen ein OFDMA-Direktzugriffskonkurrenzperiodenfeld enthält,
wobei OFDMA ein orthogonaler Frequenzmultiplex-Vielfachzugriff ist,
und das OFDMA-Direktzugriffskonkurrenzperiodenfeld angibt, dass eine Station (2), die einen Uplink-OFDMA-Mechanismus unterstützt, um einen Zugangskanal innerhalb einer Konkurrenzperiode, die durch das OFDMA-Direktzugriffkonkurrenzperiodenfeld angegeben ist, konkurrieren kann; und
eine Verarbeitungseinheit (204) zum Einstellen, dass ein Netzwerkzuweisungsvektor innerhalb der durch das OFDMA-Direktzugriffskonkurrenzperiodenfeld angegebenen Konkurrenzperiode inaktiv ist, wobei der Station (2) eine Bandbreitenressource zugewiesen wurde, wobei
die Empfangseinheit (202) ferner konfiguriert ist zum:
Empfangen eines Ressourcennachrichtenzuweisungsrahmens, der durch den Zugangspunkt (1) gesendet wird, wobei der Ressourcennachrichtenzuweisungsrahmen Informationen der Bandbreitenressource, die durch den Zugangspunkt (1) der Station (2) zugewiesen wird, enthält,
wobei der Nachrichtenrahmen ein Beacon Frame ist,
wobei der Zugangspunkt (1) den Ressourcenzuweisungsnachrichtenrahmen an die Station (2) sendet, bevor der Nachrichtenrahmen gesendet wird, und wobei
ein Feld in dem Beacon Frame eingestellt ist, um die vorgesehenen Stationen, STAs, anzugeben, die um das Zugreifen auf den Kanal innerhalb einer OFDMA-Back-Off-Periode, OBO-Periode, die innerhalb eines konkurrenzfreien Zeitraums festgelegt ist, konkurrieren.

4. System nach Anspruch 3, wobei das OFDMA-Direktzugriffskonkurrenzperiodenfeld ferner Startzeitinformationen einer OFDMA-Direktzugriffskonkurrenzperiode und Dauerinformationen der OFDMA-Direktzugriffskonkurrenzperiode umfasst.

5. Station (2), umfassend die Kommunikationsvorrichtung (200) eines drahtlosen lokalen Netzwerks, die in dem System nach einem der Ansprüche 3 oder 4 enthalten ist.

## Revendications

1. Procédé de communication de réseau local sans fil, comprenant :
la réception (503), par une station (2), d'une trame de message envoyée par un point d'accès (1), dans lequel la station prend en charge un mécanisme OFDMA UL,
dans lequel OFDMA est un accès multiple par répartition orthogonale de la fréquence,
dans lequel OFDMA UL est un accès multiple par répartition orthogonale de la fréquence de liaison montante,
dans lequel la trame de message contient un champ de période de conflit d'accès direct OFDMA, et le champ de période de conflit d'accès direct OFDMA indique que la station (2) peut rivaliser pour un canal d'accès au cours d'une période de conflit indiquée par le champ de période de conflit d'accès direct OFDMA; et
le réglage (504), par la station (2), d'un vecteur d'allocation de réseau pour être inactif au cours de la période de conflit indiquée par le champ de période de conflit d'accès direct OFDMA, dans lequel une ressource de largeur de bande a été allouée à la station (2), dans lequel
le procédé comprend en outre:
la réception, par la station (2), d'une trame d'allocation de message de ressource envoyée par le point d'accès (1), dans lequel la trame d'allocation de message de ressource contient des informations de la ressource de largeur de bande allouée à la station (2) par le point d'accès (1),
dans lequel la trame de message est une trame de balise,
dans lequel le point d'accès (1) envoie la trame de message d'allocation de ressource à la station (2) avant l'envoi de la trame de message, et dans lequel
un champ est défini dans la trame de balise pour indiquer que des stations cibles rivalisent pour accéder au canal au cours d'une période de repli OFDMA, OBO, spécifiée au cours d'une période sans conflit.

2. Procédé de communication de réseau local sans fil selon la revendication 1, dans lequel le champ de période de conflit d'accès direct OFDMA comprend en outre des informations sur le moment de début d'une période de conflit d'accès direct OFDMA et des informations de durée de la période de conflit d'accès direct OFDMA.

3. Système comprenant un point d'accès (1) et un dispositif de communication de réseau local sans fil (200),
dans lequel le dispositif de communication de réseau local sans fil (200) comprend:
une unité de réception (202) pour recevoir une trame de message envoyée par un point d'accès (1), dans lequel la trame de message contient un champ de période de conflit d'accès direct OFDMA,
dans lequel OFDMA est un accès multiple par répartition orthogonale de la fréquence,
et le champ de période de conflit d'accès direct OFDMA indique qu'une station (2) prenant en charge un mécanisme OFDMA de liaison montante peut rivaliser pour un canal d'accès au cours d'une période de conflit indiquée par le champ de période de conflit d'accès direct OFDMA; et
une unité de traitement (204) pour régler un vecteur d'allocation de réseau afin qu'il soit inactif au cours de la période de conflit indiquée par le champ de période de conflit d'accès direct OFDMA, dans lequel une ressource de largeur de bande a été allouée à la station (2), dans lequel
l'unité de réception (202) est en outre configurée pour:
recevoir une trame d'allocation de message de ressource envoyée par le point d'accès (1), dans lequel la trame d'allocation de message de ressource contient des informations de la ressource de largeur de bande allouée à la station (2) par le point d'accès (1),
dans lequel la trame de message est une trame de balise,
dans lequel le point d'accès (1) envoie la trame de message d'allocation de ressource à la station (2) avant l'envoi de la trame de message, et dans lequel
un champ est défini dans la trame de balise pour indiquer que des stations cibles, STA, rivalisent pour accéder au canal au cours d'une période de repli OFDMA, OBO, spécifiée au cours d'une période sans conflit.

4. Système selon la revendication 3, dans lequel le champ de période de conflit d'accès direct OFDMA comprend en outre des informations sur le moment de début d'une période de conflit d'accès direct OFDMA et des informations de durée de la période de conflit d'accès direct OFDMA.

5. Station (2), comprenant le dispositif de communication de réseau local sans fil (200) compris dans le système selon l'une quelconque des revendications 3 ou 4.
